# EUROPEAN PATENT APPLICATION

(11) **EP 2 957 623 A1**
(43) Date of publication of application: **23.12.2015**
(21) Application number: 14290175.0
(22) Date of filing: 17.06.2014
(51) Int. Cl.: C10L 1/32, C10L 9/08

(54) **Carbonaceous material suspension**

(71) Applicant: Rhodia Opérations, 75009 Paris (FR)
(72) Inventor: Pavageau, Bertrand, 33600 Pessac (FR)
(74) Representative: Valentino, Cédric

(57) **Abstract**

The present invention concerns a suspension comprising carbonaceous material particles, an alkoxylated phenol surfactant, and an aqueous liquid phase providing a high stability to the suspensions over time. The invention also concerns a process for the production of said suspensions and methods for generating power comprising combustion of said suspensions, notably with appropriate devices.

## Description

The present invention concerns a suspension comprising carbonaceous material particles, an alkoxylated phenol surfactant, and an aqueous liquid phase providing a high stability to the suspensions over time. The invention also concerns a process for the production of said suspensions and methods for generating power comprising combustion of said suspensions, notably with appropriate devices.

### PRIOR ART

The following discussion of the prior art is provided to place the invention in an appropriate technical context and enable the advantages of it to be more fully understood. It should be appreciated, however, that any discussion of the prior art throughout the specification should not be considered as an express or implied admission that such prior art is widely known or forms part of common general knowledge in the field.

In view of the expected shortage of crude oil as a fuel due to the decline in natural reserves worth producing on the one hand and the need to use them as a chemical raw material on the other hand, energy-recovery processes in which aqueous coal suspensions are subjected to high-temperature combustion have recently been gaining in importance. Aqueous coal or biocoal suspensions offer the major advantage over coal in solid, albeit finely divided, form in that they may be conveyed over relatively long distances at relatively low cost in transport systems known from the transport of crude oil, for example pipelines or overland pipelines. However, the disadvantage is that the dispersion medium, water, which is inert to combustion, reduces the gross calorific value of aqueous coal or biocoal suspensions. So far as the coal content of aqueous coal or biocoal suspensions is concerned, an excessive particle content has to be avoided with transportability in mind whereas as high a particle content as possible is desired with the gross calorific value in mind.

It is known from the prior art that aqueous coal or biocoal suspensions may be provided with additives which improve fluidity during transport in pipelines, but which on the other hand allow an increase in the coal or biocoal content of suspensions and hence considerably increase the gross calorific value. Such additives also improve the combustion properties of the aqueous coal suspensions. Providing the coal or biocoal used to prepare the coal suspensions has a suitable sieve analysis, it is possible to produce readily pumpable suspensions having particle contents of from 10 to 50% by weight.

However, it is generally desired to further increase the particle content in order to increase the gross calorific value of aqueous coal or biocoal suspensions, because aqueous coal or biocoal suspensions can only be economically used for industrial combustion processes for energy recovery beyond a particle content of 65% by weight coal, based on the total weight of the suspension. In addition, it is desired to further reduce the viscosity of aqueous particle suspensions to provide for convenient transport even through pipelines of comparatively narrow cross-section. It is also generally desired to obtain coal or biocoal suspensions having a high stability over time.

### INVENTION

It has now surprisingly been found that the use of alkoxylated phenol surfactant permits to produce carbonaceous material suspensions having a high stability to the suspensions over time, notably by keeping fluidity of the suspension over time. It also appears that viscosity of carbonaceous material suspensions can be further reduced and their solids content further increased by the use of a specific surfactant system. Said surfactant system also allows a high degree of loading of carbonaceous materials in the suspension without reducing the efficient combustion of the suspension.

The present invention then concerns a suspension comprising at least:
(a) carbonaceous material particles having an average diameter D50 comprised between 0.1 and 100 µm;
(b) an alkoxylated phenol surfactant; and
(c) an aqueous liquid phase.

The suspension of the present invention consists then of finely divided particles of solid carbonaceous material dispersed in an aqueous liquid phase or a liquid comprising an aqueous liquid phase.

The additives used in the present suspension allow a high degree of loading of carbonaceous materials in the suspension without reducing the efficient combustion of the suspension. In addition, the additives charges the surface of the carbonaceous materials and thereby reduces the viscosity of the suspension and improves the dispersion of the carbonaceous materials in the liquid medium. Moreover, suspensions of the invention are particularly well suited to continuous transportation via pipelines at low cost. Furthermore, such suspensions may be directly combusted without prior dehydration due to lower pollutant emissions.

Moreover, combination of carbonaceous material particles and surfactant of the present invention allows a high stability of the suspensions in various liquid phases, such as continuous liquid phases or emulsions. It also appears that the combination of carbonaceous material particles and alkoxylated phenol surfactants of the present invention permits to act as emulsifying agent, preventing the coalescence of the droplets wherein the liquid phase is an emulsion, such as for instance an oil-in-water emulsion or a water-in-oil emulsion, thus causing the emulsion to be more stable.

The present invention also concerns a process for the production of said suspension, notably by mixing at least components (a), (b) and (c).

The invention also concerns a method for improving the stability over time of a suspension comprising adding an alkoxylated phenol surfactant to a suspension comprising (a) a carbonaceous material particles having an average diameter D50 comprised between 0.1 and 100 µm and a (c) an aqueous liquid phase.

The present invention furthermore concerns a method for generating power comprising combustion of the suspension according to the invention, notably in an appropriate device. These devices may be oil and gas fired industrial and utility devices, for instance steam boilers, thermal power stations (TPS), furnaces and engines, notably internal combustion engines.

Other characteristics, details and advantages of the invention will emerge even more fully upon reading the description which follows.

### DEFINITIONS

Throughout the description, including the claims, the term "comprising one" should be understood as being synonymous with the term "comprising at least one", unless otherwise specified, and "between" should be understood as being inclusive of the limits.

Percents by weight are based on the overall content of the suspension.

As used herein, the term "surfactant" means an amphiphilic compound that comprises a hydrophilic moiety and a hydrophobic moiety and that, when present in water, lowers the surface tension of the water.

As used herein, the term "hydrocarbon group" refers to a group consisting of carbon atoms and hydrogen atoms, which group may be saturated or unsaturated, linear, branched or cyclic, aliphatic or aromatic. Hydrocarbon groups of the present invention may be alkyl groups, alkenyl groups, alkynyl groups, aryl groups, alkylaryl groups, aryalkyl groups, heterocyclic groups, and/or alkylheterocyclic groups.

As used herein, the terminology "(Cₙ-Cₘ)" in reference to an organic group, wherein n and m are each integers, indicates that the group may contain from n carbon atoms to m carbon atoms per group.

As used herein, "alkyl" or "alkylene" groups include saturated hydrocarbons having one or more carbon atoms, including straight-chain alkyl groups, such as methyl, ethyl, propyl, butyl, pentyl, hexyl, heptyl, octyl, nonyl, decyl, cyclic alkyl groups (or "cycloalkyl" or "alicyclic" or "carbocyclic" groups), such as cyclopropyl, cyclopentyl, cyclohexyl, cycloheptyl, and cyclooctyl, branched-chain alkyl groups, such as isopropyl, tert-butyl, sec-butyl, and isobutyl, and alkyl-substituted alkyl groups, such as alkyl-substituted cycloalkyl groups and cycloalkyl-substituted alkyl groups. The term "aliphatic group" includes organic moieties characterized by straight or branched-chains, typically having between 1 and 22 carbon atoms. In complex structures, the chains may be branched, bridged, or cross-linked. Aliphatic groups include alkyl groups, alkenyl groups, and alkynyl groups.

As used herein, "alkenyl" or "alkenyl group" refers to an aliphatic hydrocarbon radical which can be straight or branched, containing at least one carbon-carbon double bond. Examples of alkenyl groups include, but are not limited to, ethenyl, propenyl, n-butenyl, i-butenyl, 3-methylbut-2-enyl, n-pentenyl, heptenyl, octenyl, decenyl, and the like. The term "alkynyl" refers to straight or branched chain hydrocarbon groups having at least one triple carbon to carbon bond, such as ethynyl.

The term "aryl group" includes unsaturated and aromatic cyclic hydrocarbons as well as unsaturated and aromatic heterocycles containing one or more rings. Aryl groups may also be fused or bridged with alicyclic or heterocyclic rings that are not aromatic so as to form a polycycle, such as tetralin. An "arylene" group is a divalent analog of an aryl group.

The term "heterocyclic group" includes closed ring structures analogous to carbocyclic groups in which one or more of the carbon atoms in the ring is an element other than carbon, for example, nitrogen, sulfur, or oxygen. Heterocyclic groups may be saturated or unsaturated. Additionally, heterocyclic groups, such as pyrrolyl, pyridyl, isoquinolyl, quinolyl, purinyl, and furyl, may have aromatic character, in which case they may be referred to as "heteroaryl" or "heteroaromatic" groups.

Aryl and heterocyclic including heteroaryl groups may also be substituted at one or more constituent atoms. Examples of heteroaromatic and heteroalicyclic groups may have 1 to 3 separate or fused rings with 3 to about 8 members per ring and one or more N, O, or S heteroatoms. In general, the term "heteroatom" includes atoms of any element other than carbon or hydrogen, preferred examples of which include nitrogen, oxygen, sulfur, and phosphorus. Heterocyclic groups may be saturated or unsaturated or aromatic.

As used herein, the term "aralkyl" or "arylalkyl" means an alkyl group substituted with one or more aryl groups, such as, for example, phenylmethyl, phenylethyl, triphenylmethyl. The term "alkylaryl" means an alkyl moiety bound to an aryl moiety.

As used herein, the term "alkoxylated" means that the compound comprises one or more alkoxy or, more typically, poly(alkyleneoxy) moieties, such as, for example a poly(ethyleneoxy), poly(propyleneoxy), or poly(ethlyeneoxypropyleneoxy) moiety and the term "ethoxylated" means that the compound comprises at least one ethoxy or poly(ethyleneoxy) moiety.

It should be noted that a chemical moiety that forms part of a larger compound may be described herein using a name commonly accorded it when it exists as a single molecule or a name commonly accorded its radical. For example, the terms "pyridine" and "pyridyl" are accorded the same meaning when used to describe a moiety attached to other chemical moieties.

### DETAILS OF THE INVENTION

### (a) Carbonaceous material

As used in this specification, the term "carbonaceous" refers to a carbon-containing material and includes, by way of illustration and not limitation, coal, coke, graphite, char, biocoal such as charcoal or torrefied biomass, notably torrefied wood and the like. In general, any carbonaceous fuel can be used as the solid carbonaceous material in the invention.

In one preferred embodiment, the carbonaceous material is coal. By way of illustration, anthracite, semi-anthracite, medium and high-volatile bituminous, sub-bituminous, and lignite coals can advantageously be used to practice this invention.

The coal for use in the invention can be obtained in a dry or wet form and mixed with fluid to form a coal-fluid mixture.

In view of the manner in which coal fractures during milling, coal particles will have irregular shapes which, however, are of a body (or maximum side-to-side thickness) such that the sub-sieve sized discrete particles will pass through a specified mesh of a sieve. The size of the discrete particle can be expressed in terms of a spherical diameter comprised between 1 µm to 5000µm; through which a coal particle from a sample of coal or coal-water slurry will pass. For particles finer than 10µm, the size of the particles can be determined by means of a sieve, or a sedimentometer, or a scanning electron microscope (SEM), or the like.

In one preferred embodiment, the carbonaceous solid material is coke. Coke is the solid, cellular, infusible material remaining after the carbonization of coal, pitch, petroleum residues, and certain other carbonaceous materials. The varieties of coke, other than those from coal, generally as identified by prefixing a word to indicate the source, e.g., "petroleum coke". To indicate the process by which a coke is manufactured, a prefix also is often used, e.g., "beehive coke".

By way of illustration and not limitation, petroleum coke can be used in this invention. There are at least two types of petroleum coke: delayed coke, and fluid coke. Delayed coke generally contains from about 8 to about 18 weight percent of volatile matter, has a grindability index of from about 40 to about 60, and has a true density of from about 1.28 to about 1.42 grams per milliliter. Fluid coke generally contains from about 3.7 to about 7 weight percent of volatile matter, has a grindability index of from about 20 to about 30, and has a true density of from about 1.5 to about 1.6 grams per milliliter.

Other carbonaceous materials which can be used in this invention include, .e.g., high temperature coke, foundry coke, low temperature coke, medium temperature coke, pitch coke, char, charcoal, solvent refined coal, and mixtures of one or more of said carbonaceous materials with coal and/or petroleum coke. Mixtures of coal and petroleum coke can be used in this invention.

Carbonaceous material according to the present invention may also be a biocoal such as torrefied biomass, such as torrefied wood. Biocoal is a solid fuel made from biomass by heating it in an inert atmosphere. The result is either charcoal, or if the process temperature is mild, a product called torrefied wood. Indeed biomass may be transformed by heat in a low oxygen environment, by a process known as torrefaction, into a hydrophobic, decay-resistant material that may be used as a fuel (e.g., as a coal fuel substitute, a feedstock for entrained-flow gasification, or other fuel), a soil additive, a long-term carbon storage mechanism, or for other suitable use. In particular, torrefied biomass may be used in existing fuel-burning power plants (e.g., coal-burning power plants), thus facilitating the use of renewable fuels with existing fuel-burning infrastructure to generate electricity.

Torrefaction of biomass may be described as a mild form of pyrolysis at temperatures typically ranging between 230-320°C. During torrefaction, water present in the biomass may evaporate and biopolymers such as cellulose, hemicellulose and lignin, of the biomass may partially decompose, giving off various types of volatile organic compounds referred to as "torgas", resulting in a loss of mass, usually between approximately 30% and approximately 40% and chemical energy between approximately 10% and approximately 20% in the gas phase. Torrefaction results in energy densification, yielding a solid product with lower moisture content and higher energy content compared to untreated biomass. The resulting product may be solid, dry, dark brown or blackened material which is referred to as "torrefied wood", "torrefied biomass," "biocoal," or "renewable coal replacement fuel" ("RCRF").

Unless otherwise stated in this specification, the weight of carbonaceous material is on a moisture-free or "dry basis" herein. Thus, as used herein, the term "dry basis" refers to carbonaceous material which is substantially free of carrier liquid. Carbonaceous material is considered to be dry after it has been air dried by being exposed to air at a temperature of at least 20°C and a relative humidity of less than 50 percent for at least 24 hours.

The carbonaceous materials particles of the present invention are referred as solid particles; referring then to particles that are in the solid state, not the liquid or molten state. However, as may be appreciated by one skilled in the art, solid particles can have varying degrees of hardness depending upon factors such as exposure to atmosphere, for instance.

The carbonaceous material particles preferably provide an average diameter D50 comprised between 1 and 70 µm, more preferably comprised between 10 and 70 µm, more preferably between 15 and 50 µm.

The carbonaceous material particles preferably provide the size distribution as follows:
- D₁₀ comprise between 1 and 30 µm,
- D₅₀ comprise between 0.1 and 100 µm, preferably between 3 and 20 µm, and
- D₉₀ comprise between 50 and 200 µm.

Such an average diameter may be obtained by wet or dry grinding, notably in a grinding mill, for instance a tumbling mill, which can be done in either a batch or continuous mode. A tumbling mill is any horizontally mounted cylindrical mill which tumbles its contents when rotating. The preferred tumbling mill used in this invention is the ball mill.

Particle size distribution of carbonaceous materials and notably the average diameter D50, may be determined by the use of laser diffraction sensors, sedimentometer or a scanning electron microscope (SEM).

Suspension of the present invention may comprise from 10 to 80 % by weight of carbonaceous material particles, preferably from 40 to 60 % by weight.

### (b)Surfactant system

Suspension of the present invention then comprises at least one alkoxylated phenol surfactant. Said suspension may notably comprise several types of alkoxylated phenol surfactants.

An alkoxylated phenol compound according to the invention then is comprising a oxyalkylene group that may be for instance oxyethylene groups, oxypropylene groups, or oxyethylene/ oxypropylene groups (ie. ethoxy-propoxylated group). The number of oxyalkylene units, such as the number of oxyethylene (OE) units and/or oxypropylene (OP) units, in the alkoxylated phenol compound is normally between 2 and 100 depending on the desired HLB (hydrophile/lipophile balance). More particularly, the number of OE and/or OP units is comprised between 2 and 50. Preferably, the number of OE and/or OP units is comprised between 5 and 50.

Alkoxylated phenol compounds of the present invention may comprise one, two or three linear or branched hydrocarbon group(s), preferably comprising from 4 to 50 carbon atoms, more preferably comprising from 4 to 12 carbon atoms, connected to the phenol group. This hydrocarbon group is preferably a hydrocarbon group chosen in the group consisting of: alkyl group, such as tert-butyl, butyl, or isobutyl, aryl group, alkylaryl group, or arylalkyl group, that may comprise a heteroatom such as N, O or S. The alkyl part of alkylaryl group or arylalkyl group may be a C₁-C₆ alkyl part. Hydrocarbon group may notably be for instance a phenyl group or a phenylethyl group.

Alkoxylated phenol compounds of the present invention may also comprise a functional group connected to the alkoxylated chain, such as phosphate (PO₄⁻M⁺), sulfate (SO₄⁻M⁺), sulfonate (SO₃⁻M⁺) or carboxylate (COO⁻ M⁺). M⁺ may be a cation including but not limited to H⁺, Na⁺, NH₄⁺, K⁺, or Li⁺.

Suitable salts are, for example, metal salts, such as alkali metal or alkaline earth metal salts, for example sodium, potassium calcium or magnesium salts, or salts with ammonia or an organic amine, such as morpholine, piperidine, pyrrolidine, a mono-, di- or tri-lower alkylamine, for example ethyl-, diethyl-, triethyl- or dimethyl-propylamine, or a mono-, di- or tri-hydroxy-lower alkylamine, for example mono-, di- or tri-ethanolamine.

Alkoxylated phenol compounds of the present invention may notably be a compound of formula (I) as follows:

**(R₁)(R₂)(R₃)Phe-(OX)ₙ-R** **(I)**

wherein "Phe" is phenyl and:
- R₁ R₂ and R₃ are, independently from each other, a hydrogen or a linear or branched hydrocarbon group, preferably comprising from 4 to 50 carbon atoms, preferably comprising from 4 to 12 carbon atoms;
- X is a divalent linear or branched alkylene radical comprising from 2 to 8 carbon atoms, preferably 2 or 3 carbon atoms; X may be a mixture of several different alkylene radicals;
- n is an integer comprised between 2 and 100, preferably comprised between 2 and 50;
- R is H, -OH, alkoxy group, phosphate (P0₄⁻ M⁺), sulfate (SO₄⁻ M⁺), sulfonate (SO₃⁻ M⁺) or carboxylate (COO⁻ M⁺); M⁺ if present is a cation including but not limited to H⁺, Na⁺, NH₄⁺, K⁺ or Li⁺.

As expressed in formula (I), R₁ R₂ and R₃ are hydrogen or linear or branched hydrocarbon group connected to the phenyl structure. R₁ R₂ and R₃ may be, independently from each other, alkyl group, such as tert-butyl, butyl, or isobutyl, aryl group, alkylaryl group, or arylalkyl group, that may comprise a heteroatom such as N, O or S. The alkyl part of alkylaryl group or arylalkyl group may be a C₁-C₆ alkyl part. R₁ R₂ and R₃ may notably be, independently from each other, phenyl group or a phenylethyl group.

When R is an alkoxy group, it may be for instance a C₁-C₆ alkoxy group, such as -OCH₃, -OC₂H₅, -OC₃H₇, -OC₄H₉, -OC₅H₁₁, or -OC₆H₁₃.

Suitable alkoxylated phenol compounds may notably be chosen in the group consisting of:
- alkoxylated alkylphenol that may be for instance a C₆-C₁₆-alkanol such as alkoxylated octylphenol, alkoxylated laurylphenols and alkoxylated nonyl phenol, such as polyethoxylated octylphenols and polyethoxylated nonylphenols;
- alkoxylated alkylarylphenol that may be for instance an alkoxylated mono-, di- or tristyrylphenol, such as polyethoxylated tristyrylphenol;
- Alkoxylated sulfated and/or phosphate alkylphenol; and
- Alkoxylated sulfated and/or phosphate alkylarylphenol, such as thoxylated and/or propoxylated, sulfated and/or phosphated, mono-, di- or tristyrylphenols, ethoxylated polyarylphenol ether phosphate.

Tristyrylphenol ethoxylates, for other uses, are for instance disclosed by US patent number 6,146,570, published PCT patent application number WO 98/012921 and WO 98/045212, incorporated herein by reference.

Alkoxylated phenol compounds of the present invention may notably be chosen in the group consisting of:
nonylphenol ethoxylated with 2 OE units,
nonylphenol ethoxylated with 4 OE units,
nonylphenol ethoxylated with 6 OE units,
nonylphenol ethoxylated with 9 OE units,
nonylphenol ethoxy-propoxylated with 25 OE+OP units,
nonylphenol ethoxy-propoxylated with 30 OE+OP units,
nonylphenol ethoxy-propoxylated with 40 OE+OP units,
nonylphenol ethoxy-propoxylated with 55 OE+OP units,
nonylphenol ethoxy-propoxylated with 80 OE+OP units.
di(1-phenylethyl)phenol ethoxylated with 5 OE units,
di(1-phenylethyl)phenol ethoxylated with 7 OE units,
di(1-phenylethyl)phenol ethoxylated with 10 OE units,
tri(1-phenylethyl)phenol ethoxylated with 8 OE units,
tri(1-phenylethyl)phenol ethoxylated with 16 OE units,
tri(1-phenylethyl)phenol ethoxylated with 20 OE units,
tri(1-phenylethyl)phenol ethoxylated with 25 OE units,
tri(1-phenylethyl)phenol ethoxylated with 40 OE units,
tri(1-phenylethyl) phenols ethoxy-propoxylated with 25 OE+OP units,
ethoxylated and sulfated di(1-phenylethyl)phenol comprising 5 OE units
ethoxylated and sulfated di(1-phenylethyl)phenol comprising 7 OE units
ethoxylated and sulfated di(1-phenylethyl)phenol comprising 15 OE units
ethoxylated and sulfated di(1-phenylethyl)phenol comprising 16 OE units
ethoxylated and sulfated tri(1-phenylethyl)phenol comprising 16 OE units
ethoxylated and phosphated tri(1-phenylethyl)phenol comprising 16 OE units.

Surfactant system of the present invention may also comprise one or other surfactants such as for instance alkali metal salt of a naphthalene sulfonic acid and alkali metal of lignosulfonates.

Alkali metal salt of a naphthalene sulfonic acid may notably be produced as described in U.S. Pat. No. 3,067,423. It can be prepared by sulfonating naphthalene with sulfuric acid, condensing the sulfonated naphthalene with formaldehyde, and then neutralizing the condensate so obtained with sodium hydroxide or ammonium hydroxide. This alkali metal or ammonium salt of a condensed mono naphthalene sulfonic acid is comprised of at least 85 weight percent of a repeating structural unit of the formula: 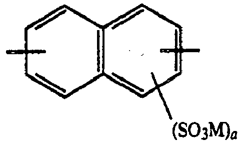 wherein M is a metal selected from the group consisting of sodium, potassium and ammonium, and a is an integer of from 1 to 8. Comparable compounds with a benzene rather than naphthalene nucleus also can be used.

Preferably the alkali metal salt of a naphthalene sulfonic acid may be the ammonium naphthalene sulphonate (CAS N°37087-01-07).

Alkali metal of lignosulfonates usually have an equivalent weight of from about 100 to about 350, contain from about 2 to about 60 phenyl propane units, and, preferably, from about 3 to about 50 phenyl propane units, and are made up of cross-linked polyaromatic chains. Some of the preferred lignosulfonates include those listed on page 293 of McCutcheon's "Emulsifiers and Detergents", North American Edition (McCutcheon Division, MC Publishing Co., Glen Rock, N.J., 1981) and in the other portions of McCutcheon's which describes said lignosulfonates, the disclosure of which is hereby incorporated by reference into this specification. In one embodiment, the lignosulfonate surfactant contains from about 0.5 to about 8.0 sulfonate groups; in this embodiment, one species has 0.5 sulfonate groups, one has 1.0 sulfonate group, one has 2.0 sulfonate groups, one has 4.0 sulfonate groups, and one has 7.5 sulfonate groups.

Effect of the surfactant system which is used in the suspension may be determined by measuring the effects of the dispersant upon the system at a given concentration. Notably, viscosity versus shear rate of the stirred slurry is measured while titrating with increasing amounts of the surfactant system; and the point at which the slurry viscosity ceases to decrease is noted. For any given surfactant(s), and system, the most effective concentration is the one which gives the minimum viscosity under a given set of test conditions, and the efficiency of different surfactant can be compared by testing them with a given system under comparable concentration and test conditions.

The amount of surfactant system which can be used will vary, depending upon such factors as the concentration of the carbonaceous material in the slurry, the particle size and particle size distribution, the amount of ash minerals such as clays and other minerals present, the temperature of the slurry, the pH, the original zeta potential of the particles, the nature of the surfactant(s), etc.

In general, the surfactant system preferably is present in the suspension at a concentration of from 0.01 to 5 % by weight, by weight of dry carbonaceous material particles.

### (c) Aqueous liquid phase

The liquid phase of the suspension according to the invention may be of various nature, such as water, water/water-miscible organic liquid mixture, and/or water and an organic liquid or mixture thereof. The liquid phase of the suspension at least comprises an aqueous phase.

Typically the liquid phase of the suspension may comprise between 5 and 100 % by weight of water, preferably between 10 and 90 % by weight, notably between 15 and 50 % by weight.

As used in this specification, the term "liquid" refers to a substance which undergoes continuous deformation under a shearing stress. The liquid used in the suspension preferably performs at least two functions, it first fills the interstitial pores of the carbonaceous solid material, and it provides the vehicle for separation of the particles of the carbonaceous solid material to minimize collisions between said particles.

By way of illustration and not limitation, some of the liquids which can be used in the mixture include: water; waste industrial solvents such as, effluents from waste disposal plants, contaminated waste water containing hydrocarbons from, e.g., oil-separation processes, and the like; aromatic and aliphatic alcohols containing 1-10 carbon atoms, such as methanol, ethanol, propanol, butanol, phenol, glycerol or glycerol derivatives, mixtures thereof, and the like; pine oil; petroleum liquids such as, number 2 fuel oil, number 4 fuel oil, number 6 fuel oil, gasoline, naphtha, mixtures thereof, and the like; hydrocarbon solvents such as, e.g., benzene, toluene, xylene, kerosene, and derivatives thereof; acetone; aniline; anisole; halobenzenes such as, bromobenzene and chlorobenzene; nitrobenzene; carbon tetrachloride; chloroform; cyclohexane; n-decane; dodecane; 1,1,2,2-tetrachloroethane; ethyl bromide; 1,2-dichloroethylene; tetrachloroethylene; trichloroethylene, ethylene chloride; ethyl ether; ethyl iodide; glycol; n-hendecane; n-heptane; 1-heptanol; 1-hexanol; methylene halides such as, e.g., methylene chloride, methylene bromide, and methylene iodide; n-octadecane; n-octane; 1-octanol; n-pentadecane; pentanol; and the like. The aforementioned list is merely illustrative.

It can first of all be water. It can also be a water/water-miscible organic liquid mixture. As an example of a water-miscible organic liquid of this type, mention may be made of alcohols such as methanol or ethanol, glycols such as ethylene glycol, acetate derivatives of glycols, such as ethylene glycol monoacetate, or polyols, notably glycerol.

The liquid phase of the present invention may notably be a mixture of water and glycerol, for instance comprising 40 to 90 % wt of polyol, such as glycerol and 60 to 10 % wt of water.

The liquid phase may also consist of a blend of an aqueous liquid and an organic liquid. As an example of an organic liquid, mention may be made of energy carrier liquid from petroleum products, that are materials derived from crude oil petroleum as it is processed in oil refineries, such as by way of example fuel oil, gasoline, jet fuel, and diesel fuel or a mixtures of them, or energy carrier liquid not derived from petroleum, such as biodiesel, bioethanol or synthetic fuels, notably from biomass and/or fossil reagents.

Organic liquid may also be aliphatic hydrocarbons such as for instance hexane, heptane, octane or nonane, inert cycloaliphatic hydrocarbons such as cyclohexane, cyclopentane or cycloheptane, aromatic hydrocarbons such as benzene, toluene, ethylbenzene, xylenes, or liquid naphthenes. Also suitable are petroleum fractions of the Isopar or Solvesso type (Trade Marks registered by the company Exxon), in particular Solvesso 100 which contains essentially a mixture of methylethylbenzene and trimethylbenzene, Solvesso 150 which contains a mixture of alkylbenzenes, in particular of dimethylbenzene and of tetramethylbenzene, and Isopar which contains essentially C11 and C12 isoparaffinic and cycloparaffinic hydrocarbons. Other types of petroleum fractions that may also be mentioned include those of Petrolink® type from the company Petrolink or of Isane® type from the company Total.

Of course, the liquid phase can be based on a mixture of two or more hydrocarbons or compounds of the type described above.

The liquid phase of the present invention may also be a mixture of water and immiscible organic liquid, such as for instance aliphatic hydrocarbons, notably diesel or biodiesel. Water and immiscible organic liquid can form different types of emulsions. As an example, oil and water can form, first, an oil-in-water emulsion, wherein the oil is the dispersed phase, and water is the dispersion medium. Second, they can form a water-in-oil emulsion, wherein water is the dispersed phase and oil is the external phase or continuous phase. Multiple emulsions are also possible, including a water-in-oil-in-water emulsion and an oil-in-water-in-oil emulsion. The droplets dispersed in the dispersion medium are usually assumed to be statistically distributed.

### (d)Pseudoplastic water-soluble polymers

Suspensions of the present invention may also comprise at least one pseudoplastic water-soluble polymers.

Water-soluble polymers may be natural or synthetic water-soluble polymers. Water-soluble polymers are substances that dissolve, disperse or swell in water and, thus, modify the physical properties of aqueous systems in the form of gellation, thickening or emulsification/stabilization. These polymers usually have repeating units or blocks of units; the polymer chains contain hydrophilic groups that are substituents or are incorporated into the backbone. The hydrophilic groups may be nonionic, anionic, cationic or amphoteric.

A pseudoplastic polymer is a specific rheology polymer used to achieve pseudoplastic flow behavior. Pseudoplasticity is a term that refers to the reduction of viscosity when shear forces are applied; the stronger the shear stress the pseudoplastic material is subjected to, the stronger the shear thinning effect and the stronger the decrease in viscosity. As soon as the shear stress is no longer applied, viscosity immediately returns to the original level.

Pseudoplastic water-soluble polymers are usually present in the suspension in an amount sufficient to both increase the viscosity of the suspension at low shear rate and to achieve good flowability properties at high shear rate relative to the pseudoplastic behavior of a suspension that does not contain said pseudoplastic water-soluble polymers.

Suspension of the invention may comprise from 0.01 to 10% by weight of pseudoplastic water-soluble polymer.

Pseudoplastic water-soluble polymers are preferably chosen in the group consisting of: poly(ethylene glycol), polyvinyl pyrrolidone, polyvinyl alcohol, polyacrylic acid, polyacrylamide, polyoxazoline (ie. poly(2-alkyl-2-oxazolines), polyphosphoesters like polyphosphates and polyphosphonates, polyphosphazenes and polysaccharides or polysaccharide derivatives.

Polysaccharides or polysaccharide derivatives may notably be chosen in the group consisting of: xanthan, pectin, chitosan, dextran, carrageenan, guar, cellulose, cellulose ethers, such as hydroxypropylmethyl cellulose (HPMC), hydroxypropyl cellulose (HPC), hydroxyethyl cellulose (HEC), and sodium carboxy methyl cellulose (Na-CMC), hyaluronic acid, and starch.

Pseudoplastic water-soluble polymers are more preferably chosen in the group consisting of: polyacrylic acids, xanthan gums, cellulose, cellulose ethers, such as hydroxypropylmethyl cellulose (HPMC), hydroxypropyl cellulose (HPC), hydroxyethyl cellulose (HEC), and sodium carboxy methyl cellulose (Na-CMC).

### (e) Other additives

Suspension of the present invention may also comprise one or several possible additives usually known in this technical field, such as for instance dispersing agents, humectants, wetting agents, rheology additives bases, corrosion inhibitors, foam inhibitors, stabilizers and biocidal preservatives.

Any dispersing agent which disperses the carbonaceous particles in the water can be used. The dispersing agent can be inorganic such as sodium hydroxide or organic, notably selected from the group of anionic surfactants, nonionic surfactants, cationic surfactants, and amphoteric surfactants. The molecular weight of the dispersing agent should be at least about 200.

Any base which will control the pH of the suspension without adversely affecting the slurry may be used. Among the bases useful in this invention are: ammonium hydroxide, calcium hydroxide, sodium hydroxide, potassium hydroxide, diethylamine and triethanolamine. Preferably, the base is a member selected from the group consisting of ammonium hydroxide, sodium hydroxide and potassium hydroxide.

### Characteristics of the final suspension

When the liquid phase of the suspension is water or a water/water-miscible organic liquid mixture, said suspension may provide a viscosity comprised between 1 and 5000 mPa.s, preferably between 1 and 1500 mPa.s, at a temperature of 20°C.

The rheological properties of the suspensions may be measured using a rheometer under controlled shear rate conditions.

If the viscosity of the suspension is higher than the target range, it is possible to adjust the surfactant/dispersant concentration, the solid and/or the liquid flow rate, the pH and/or the particle size distribution. The pH of the suspension can be adjusted by adding more surfactant/dispersant and/or a pH adjusting agent such as caustic or ammonium hydroxide.

### Preparation of the suspension

Suspension of the present invention may be obtained by several known methods; notably by mixing at least components (a), (b) and (c), for instance all at the same time or successively.

It is notably possible to produce the suspension by milling under wet conditions, which can be done in either a batch or continuous mode. It is perfectly possible to add the carbonaceous material, the liquid phase and the additives together in advance of the milling operation to provide a composition of exactly desired concentration or alternatively the carbonaceous material content may be intentionally set a low level during milling and increased to the desired level afterwards by a dewatering process. The milling processes described here are presented by way of example and are not intended to be limiting inasmuch as there are numerous methods of milling carbonaceous materials into a composition, including dry methods using a ball mill, or any of a number of other mills such as those cited earlier. If any dry milling method is employed, the washing step may preferably be conducted after the dry milling to avoid a dewatering and drying procedure prior to the milling.

It is also possible to proceed to a wet or dried milling of the carbonaceous material to reach the desired size distribution, and notably afterward blend the carbonaceous material with the liquid phase and the additives with a classical agitation blade/counter blade.

To prepare the suspension of the invention, the surfactant system formulated in paste or highly viscous liquid form may be stirred into the liquid phase.

The following examples are included to illustrate embodiments of the invention. Needless to say, the invention is not limited to the described examples.

### EXPERIMENTAL PART

Compounds used in the following examples are as follows:
- Torrefied wood chips: 28GJ/Ton , 10% RH, feedstock origin, from New Biomass Energy LLC
- Soprophor 4D360 provided by Solvay: sulfated polyarylphenol ethoxylate, NH₄ salt
- Soprophor 796P provided by Solvay: ethoxylated propoxylated polyarylphenol
- Soprophor BSU provided by Solvay: alkoxylated polyarylphenol
- Soprophor CY/8 provided by Solvay: ethoxylated tristyrilphenol
- Soprophor FL provided by Solvay: ethoxylated polyarylphenol phosphate amine salt
- Soprophor S25 provided by Solvay: tristyrylphenol ethoxylate, HLB = 14.5
- Igepal CO-887 EP provided by Solvay: nonylphenol ethoxylate
- Ages Rhodasurf BC 420: tridecylalcohol ethoxylate (3OE)
- Xanthan gum Rhodigel® USP

### Example 1: preparation of torrefied wood particles

The torrefied wood chips obtained from a torrefactor process and having cm scale was first grinded by dry grinding process to obtain 300 µm to 1mm particle size. Then, this powder is dried milled by Retsch ZM200 dry miller with the following characteristics: grid 120µm, speed 18000 rpm, 25°C, nitrogen purge, 80g per batch in 10 min; to obtain particle size distribution centered at 25 µm as followed:
D₁₀= 6 µm
D₅₀ = 23 µm
D₉₀ = 60 µm

These size distributions are measured with Sympatec laser diffraction sensors.

### Example 2: water slurries preparation

Water slurries are prepared by mixing 1 % wt of torrefied wood particules as obtained in Example 1 with water in vials with a micro-dosing machines Mettler-Toledo ("Quantos"). On an automated platform 1 % wt of surfactants are added within the vials and each solution is then vortexed during 30 s.

### Example 3: time stability trials

Each 30 minutes water slurries as prepared in Example 2 were brought then by a robotic arm to a camera to take a picture. The stability is characterized by the absence of demixing/settling in samples after 6 hours of static storage in vials placed at 25°C.

Results are mentioned in the following Table 1:

**Table 1**

| **Surfactants** | **Visual aspects of formulations after 6 hours** |
|---|---|
| **C1.** No surfactant | Heavy sedimentation |
| **C2.** Ages Rhodasurf BC 420 | Sedimentation |
| **1.** Soprophor 4D360 | Dispersion |
| **2.** Soprophor 796P | Dispersion |
| **3.** Soprophor BSU | Dispersion |
| **4.** Soprophor CY/8 | Dispersion |
| **5.** Soprophor FL | Dispersion |
| **6.** Soprophor S25 | Dispersion |
| **7.** Igepal C0-887 EP | Dispersion |

| | |
|---|---|
| "Dispersion": corresponds to a monophasic aspect "Sedimentation": corresponds to a biphasic aspect | |

It appears then that the polyalkoxylated phenol surfactants of the present invention permit to provide a sufficient stability to the suspensions.

The term "stability" as used herein includes static and dynamic stability and as applied to a carbonaceous material particles slurry means the capability of the slurry to maintain its level of homogeneity over a selected period of time, such as, for example, a time measured from formation of the slurry with its particles dispersed to the time at which the slurry tends to undergo a change in its rheological properties. The term stability implies that the physical state of the slurry will not readily change or undergo fluctuations which would impair its use.

### Example 4: time stability trials

Water slurries as prepared in Example 2 are used there by adding 0.3 % wt of xanthan gum. Each day these water slurries were brought then by a robotic arm to a camera to take a picture. The stability is characterized by the absence of demixing/settling in samples after 3 weeks of static storage in vials placed at 25°C.

Results are mentioned in the following Table 2:

**Table 2**

| **Surfactants** | **Visual aspects of formulations after 3 weeks** |
|---|---|
| **C1.** No surfactant | Heavy sedimentation |
| **C2.** No surfactant, xanthan gum only | Sedimentation |
| **1.** Soprophor FL and xanthan gum | Dispersion |

| | |
|---|---|
| "Dispersion": corresponds to a monophasic aspect "Sedimentation": corresponds to a biphasic aspect | |

Viscosity of water slurries comprising 25 % wt of torrefied wood of Example 1, 1 % wt of Soprophor FL and 0.3 % wt of xanthan gum are also measured at different time with a rheometer AR-G2 (TA Instruments) at 25°C. Results are expressed in Table 3 as follows:

**Table 3**

| **Surfactants** | **Viscosity (cP) at 100 s(-1)** |
|---|---|
| **C1.** No surfactant | 250 |
| **C2.** No surfactant, xanthan gum only | 840 |
| **1.** Soprophor FL and xanthan gum / t=0 | 880 |
| **2.** Soprophor FL and xanthan gum / t=24 h | 877 |
| **3.** Soprophor FL and xanthan gum / t=1 week | 863 |
| **4.** Soprophor FL and xanthan gum / t=2 weeks | 872 |
| **5.** Soprophor FL and xanthan gum / t=3 weeks | 868 |

Rheological properties of the suspensions were measured using a ARG2000 rheometer (cone plate system) under controlled shear rate conditions. A cone and plate geometry was chosen with a 40 mm cone diameter and a 90 µm gap between the cone and the plate. In order to prevent solvent evaporation during measurements, a cover was used to isolate the sample. A constant temperature was maintained at 25°C with a controlled thermostatic water bath. The shear stress as a function of the shear rate was recorded for progressively increased shear rates. The shear rate was increased in 10 times from 0.1 to 400 s⁻¹, respectively, at which the shear rate was kept constant. Each time interval lasted 2 min and the shear stress was recorded at the end of each time interval. For each pair of shear stress and shear rate, the viscosity was calculated and plotted as a function of the shear rate. The standard used before the viscosity measurement was a silicone oil (viscosity = 500 cP at 25°C).

It appears then that the polyalkoxylated phenol surfactants of the invention permit to provide a sufficient stability to the suspensions, notably by keeping fluidity of the suspension over time.

### Example 5: water/diesel/particles slurries

These slurries are prepared by first mixing 20 % wt of water, 63 % of diesel (Shell V-Power Diesel CAS number : 68334-30-5) and 2 % wt of Soprophor BSU. 15 % wt of torrefied wood particles as obtained in Example 1 are then added and mixed with the first mixture to obtain a stable dispersion. An oil-in-water (o/w) emulsion is obtained with the torrefied wood particles located in the continuous phase. It can be observed that the torrefied wood particles get caught between the droplets in the continuous phase, which prevents them from settling. At the same time, the torrefied wood particles seem to act as emulsifying agents, preventing the coalescence of the droplets.

### Example 6: water/glycerol/particles slurries

These slurries are prepared by first mixing 80 % wt of glycerol, 20 % of water and optionally 1 % wt of Soprophor FL and 0.3 % wt of xanthan gum. 30 % wt of torrefied wood particles as obtained in Example 1 are then added and mixed with the first mixture to obtain a stable dispersion.

The stability is determined as expressed in Example 3 and results are mentioned in the following Table 4:

**Table 4**

| **Surfactants and additive** | **Viscosity (cP) at 100 s(-1)** | **Visual aspects of formulations after 3 days** |
|---|---|---|
| **C1.** Nothing | 1500 | Heavy sedimentation |
| **C2.** Xanthan gum | 2300 | Dispersion |
| **1.** Soprophor FL and xanthan gum | 2980 | Dispersion |

It appears then that the polyalkoxylated phenol surfactants of the present invention permit to provide a sufficient stability to the suspensions.

## Claims

1. A suspension comprising at least:
(a) carbonaceous material particles having an average diameter D50 comprised between 0.1 and 100 µm;
(b) an alkoxylated phenol surfactant; and
(c) an aqueous liquid phase.

2. Suspension according to claim 1 wherein carbonaceous material particles are chosen in the group consisting of: coal, coke, graphite, char, and biocoal.

3. Suspension according to claim 1 or 2 wherein carbonaceous material particles are from torrefied biomass.

4. Suspension according to anyone of claims 1 to 3 wherein carbonaceous material particles provide the size distribution as follows:
- D₁₀ comprise between 1 and 30 µm,
- D₅₀ comprise between 0.1 and 100 µm, and
- D₉₀ comprise between 50 and 200 µm.

5. Suspension according to anyone of claims 1 to 4 wherein the alkoxylated phenol surfactant has a number of oxyalkylene units comprised between 2 and 100.

6. Suspension according to anyone of claims 1 to 5 wherein the alkoxylated phenol surfactant comprises one, two or three linear or branched hydrocarbon group(s).

7. Suspension according to claim 6 wherein the hydrocarbon group is a chosen in the group consisting of: alkyl group, aryl group, alkylaryl group, or aryalkyl group, that may comprise a heteroatom such as N, O or S.

8. Suspension according to anyone of claims 1 to 7 wherein the alkoxylated phenol surfactant have a function group connected to the alkoxylated chain, chosen in the group consisting of: phosphate (PO₄⁻M⁺), sulfate (SO₄⁻M⁺), sulfonate (SO₃⁻ M⁺) or carboxylate (COO⁻ M⁺); wherein M⁺ is a cation.

9. Suspension according to anyone of claims 1 to 8 wherein the alkoxylated phenol surfactant is a compound of formula (I) as follows:
**(R₁)(R₂)(R₃)Phe-(OX)ₙ-R** **(I)**
wherein "Phe" is phenyl and:
- R₁ R₂ and R₃ are, independently from each other, a hydrogen or a linear or branched hydrocarbon group;
- X is a divalent linear or branched alkylene radical comprising from 2 to 8 carbon atoms;
- n is an integer comprised between 2 and 100;
- R is H, -OH, alkoxy group, phosphate (PO₄⁻ M⁺), sulfate (SO₄⁻ M⁺), sulfonate (SO₃⁻ M⁺) or carboxylate (COO⁻ M⁺); M⁺ if present is a cation.

10. Suspension according to anyone of claims 1 to 9 wherein the alkoxylated phenol surfactant is chosen in the group consisting of: alkoxylated alkylphenol, alkoxylated alkylarylphenol, alkoxylated sulfated and/or phosphate alkylphenol and alkoxylated sulfated and/or phosphate alkylarylphenol.

11. Suspension according to anyone of claims 1 to 10 wherein said suspension comprises from 0.01 to 5 % by weight of alkoxylated phenol surfactant, by weight of dry carbonaceous material particles.

12. Suspension according to anyone of claims 1 to 11 wherein the liquid phase of said suspension is water, water/water-miscible organic liquid mixture, and/or a blend of water and an organic liquid or mixture thereof.

13. Suspension according to anyone of claims 1 to 12 wherein the liquid phase comrpises an organic liquid is an energy carrier liquid derived from petroleum products or an energy carrier liquid derived from biomass and/or fossil reagents.

14. Suspension according to anyone of claims 1 to 13 wherein the liquid phase of the suspension is water or a water/water-miscible organic liquid mixture, and said suspension provides a viscosity comprised between 1 and 5000 mPa.s, at a temperature of 20°C.

15. Suspension according to anyone of claims 1 to 14 wherein said suspension comprises at least a pseudoplastic water-soluble polymer.

16. Suspension according to claim 15 wherein pseudoplastic water-soluble polymer is chosen in the group consisting of: polyacrylic acids, xanthan gums, cellulose, cellulose ethers, such as hydroxypropylmethyl cellulose (HPMC), hydroxypropyl cellulose (HPC), hydroxyethyl cellulose (HEC), and sodium carboxy methyl cellulose (Na-CMC).

17. Process for the preparation of a suspension according to anyone of claims 1 to 16 by mixing at least components (a), (b) and (c).

18. Process for the preparation of a suspension according to claim 17 wherein suspension is produced by milling under wet conditions.

19. A method for improving the stability over time of a suspension comprising adding an alkoxylated phenol surfactant to a suspension comprising (a) a carbonaceous material particles having an average diameter D50 comprised between 0.1 and 100 µm and a (c) an aqueous liquid phase.

20. A method for generating power comprising combustion of the suspension according to anyone of claims 1 to 16.
